# EUROPÄISCHE PATENTANMELDUNG

(11) **EP 4 744 874 A1**
(43) Veröffentlichungstag der Anmeldung: **20.05.2026**
(21) Anmeldenummer: 25214543.8
(22) Anmeldetag: 10.11.2025
(51) Int. Cl.: B29D 30/00, B29D 30/06

(54) **VERFAHREN ZUR BEHANDLUNG EINER RADIAL INNEREN SEITE EINES REIFENS, VORRICHTUNG, COMPUTERPROGRAMM UND COMPUTERLESBARES SPEICHERMEDIUM**

(30) Priorität: 15.11.2024 DE 102024211016
(71) Anmelder: Continental Reifen Deutschland GmbH, 30175 Hannover (DE)
(72) Erfinder: Durovec, Juraj, 020 01 Púchov (SK); Sterdas, Jozef, 020 01 Púchov (SK); Ludwig, Jens, 30175 Hannover (DE); Himmelsbach, Peter, 38229 Salzgitter (DE)
(74) Vertreter: Continental Corporation

(57) **Zusammenfassung**

Verfahren zur Behandlung einer radial inneren Seite (10) eines Reifens (1) weist die folgenden Schritte auf: Bereitstellen des Reifens (1), wobei auf der radial inneren Seite (10) des Reifens (1) ein Trennmittel aufgebracht ist und Durchführen einer CoronaBehandlung zumindest eines Teilbereichs (20) der radial inneren Seite (10) des Reifens.

## Beschreibung

Die Erfindung betrifft ein Verfahren zur Behandlung einer radial inneren Seite eines Reifens. Die Erfindung betrifft ferner eine Vorrichtung, sowie ein Computerprogramm und ein computerlesbares Speichermedium.

Die Aufgabe, die der Erfindung zugrunde liegt, ist es, ein Verfahren zur Behandlung einer radial inneren Seite eines Reifens zu schaffen, das einen Beitrag leistet, eine Behandlung des Reifens zu verbessern.

Die Aufgabe wird gelöst durch die Merkmale der unabhängigen Patentansprüche. Vorteilhafte Weiterbildungen der Erfindung sind in den Unteransprüchen gekennzeichnet.

Gemäß einem ersten Aspekt umfasst das Verfahren zur Behandlung einer radial inneren Seite eines Reifen:
- Bereitstellen des Reifens, wobei auf der radial inneren Seite des Reifens ein Trennmittel aufgebracht ist; und
- Durchführen einer Corona-Behandlung zumindest eines Teilbereichs der radial inneren Seite des Reifens.

Bei dem Reifen handelt es sich insbesondere um einen Fahrzeugreifen. Ferner besteht der Reifen somit insbesondere aus Kautschuk und ist ein Luftreifen. Bei einem Luftreifen wird Luft in einem Schlauch oder schlauchlos zwischen Reifen und Felge eingeschlossen. Bei einem Reifen aus hauptsächlich Kautschuk ist insbesondere eine Vulkanisation während des Herstellungsprozesses nötig.

Die radial innere Seite des Reifens ist die Seite näher am Mittelpunkt des Reifens als eine Außenseite. Sofern der Reifen nach seiner Herstellung auf einer Felge montiert wird, handelt es sich bei der radial inneren Seite des Reifens insbesondere um die Seite des Reifens, die der Felge zugewandt ist.

Auf der radial inneren Seite des Reifens ist ein Trennmittel aufgebracht. Dieses kann insbesondere auf Silikon basiert sein. Alternativ kann das Trennmittel nicht auf Silikon basiert sein. Ferner dient es beispielsweise dazu, dass der Reifen nach einer Vulkanisation leicht von einer entsprechenden Vorrichtung (beispielsweise umfassend einen Heizbalg auch Bladder genannt sowie eine Reifenprofilform) für die Vulkanisation abgelöst werden kann. Das Trennmittel kann beispielsweise ferner auf den Reifen aufgetragen insbesondere gesprüht werden. Außerdem kann das Trennmittel beispielsweise auch auf die entsprechende Vorrichtung aufgetragen insbesondere gesprüht werden.

Eine Corona-Behandlung ist ein elektrochemisches Verfahren, um eine Oberfläche zu modifizieren. Hierbei wird eine hochfrequente Hochspannungs-Entladung in der Luft auf die Oberfläche gelenkt.

Insbesondere ist der behandelte Teilbereich zentriert bezüglich einer Breite der gesamten radial inneren Seite des Reifens.

Vorteilhafterweise ermöglicht es das Verfahren, dass eine Adhäsion an die radial innere Seite des Reifens trotz des Trennmittels auf der radial inneren Seite des Reifens ausreichend hoch ist, um beispielsweise eine weitere Schicht anzubringen. Insbesondere bedeutet hierbei die Adhäsion an die radial innere Seite nicht unbedingt, dass eine weitere Schicht in direkten Kontakt mit dem Reifen an sich steht, sondern vielmehr in Kontakt zu dem Reifen mitsamt dem aufgebrachten Trennmittel steht.

Durch die Corona-Behandlung wird die Adhäsion an die radial innere Seite des Reifens verbessert, obwohl das Trennmittel ohne Behandlung eine solche Haftung eines Reifens beispielsweise an eine Vorrichtung bei einem Herstellungsprozess des Reifens verhindern soll.

Somit stellt das Verfahren insbesondere auch eine Möglichkeit dar, dass etwas an die radial innere Seite des Reifens geklebt werden kann, ohne dass das Trennmittel beispielsweise mit mechanischen Bürsten oder einem Laserstrahl entfernt wird.

In einer vorteilhaften Ausgestaltung des Verfahrens wird nach der Durchführung der Corona-Behandlung eine Klebeschicht auf den behandelten Teilbereich der radial inneren Seite des Reifens angebracht.

Bei der Klebeschicht handelt sich insbesondere um eine Schicht aus insbesondere Klebstoff. Ein Teil der Schicht klebt somit an dem behandelten Teilbereich der radial inneren Seite des Reifens aufweisend das Trennmittel.

Das Anbringen der Klebeschicht kann insbesondere sofort nach oder bis zu zwanzig Minuten später nach der Corona-Behandlung erfolgen.

Vorteilhafterweise, kann somit eine weitere nicht klebende Schicht oder ein nicht klebendes Material im Inneren des Reifens an die Klebeschicht angebracht werden. Trotz des Trennmittels ist die Haftung an die radial innere Seite des Reifens der klebenden Schicht ausreichend hoch.

Ferner kann diese Klebeschicht dazu dienen, einen selbstdichtenden Reifen umzusetzen.

In einer vorteilhaften Ausgestaltung wird bei dem Verfahren nach der Durchführung der Corona-Behandlung ein doppelseitiges Klebeband als Klebeschicht auf den behandelten Teilbereich der radial inneren Seite des Reifens angebracht.

Hierbei sind beide Seiten des Klebebands klebend, wobei eine Seite des Klebebands insbesondere die radial innere Seite des Reifens aufweisend das Trennmittel kontaktiert. An die andere klebende Seite des doppelseitigen Klebebandes kann somit beispielsweise eine weitere Schicht oder ein Material geklebt werden und im Inneren des Reifens befestigt werden.

Dies hat den Vorteil, dass mittels Kleben an das Klebeband als Klebeschicht eine weitere Schicht oder ein Material schnell und effektiv an die radial innere Seite des Reifens angebracht werden kann.

In einer vorteilhaften Ausgestaltung wird nach dem Aufbringen der Klebeschicht auf dieser ein Schaum angebracht, der dazu ausgebildet ist, Hohlraumgeräusche in einem Reifeninneren zu dämpfen.

Beispielsweise handelt es sich bei dem Schaum um Polyurethanschaum. Hohlraumgeräusche resultieren insbesondere aus vibrierender Luft in einem Reifeninneren während eines Abrollens des Reifens auf einer Fahrbahn und führen zu Strukturgeräuschen in einem Fahrzeuginnenraum. Der Schaum ist dazu ausgebildet, die Hohlraumgeräusche zu dämpfen.

Das Reifeninnere bezieht sich hierbei nicht auf eine Fläche, sondern auf das Volumen, das von dem Reifen umfasst wird.

Insbesondere können diese Geräusche bei elektrifizierten Fahrzeugen als störend empfunden werden, wenn in diesem keine Geräusche durch einen Verbrennungsmotor auftreten.

In einer vorteilhaften Ausgestaltung entspricht eine Breite des behandelten Teilbereichs 25% bis 80% einer Reifenbreite des Reifens.

Die Reifenbreite des Reifens bezieht sich hierbei insbesondere auf eine Nenn-Querschnittsbreite des Reifens, das heißt insbesondere auf die Querschnittsbreite des Reifens entsprechend der vorgeschriebenen Bezeichnung auf der Seitenwand des Reifens gemäß EU-Norm ECE-R 30. Dementsprechend wird also auch nur bei einem Teil der radial inneren Seiten des Reifens eine Corona-Behandlung durchgeführt.

Die Breite des Teilbereichs bleibt insbesondere während der Corona-Behandlung des Reifen gleich.

Vorteilhafterweise erfolgt also keine Corona-Behandlung der gesamten radial inneren Seite des Reifens, wodurch Zeit und/oder Kosten gespart werden.

In einer vorteilhaften Ausgestaltung entspricht eine Breite des behandelten Teilbereichs 25% bis 85% einer Breite der Lauffläche des Reifens.

Die Lauffläche ist der Teil des Reifens, der mit dem Boden in Berührung kommt.

Vorteilhafterweise erfolgt also keine Corona-Behandlung der gesamten radial inneren Seite des Reifens, wodurch Zeit und/oder Kosten gespart werden.

In einer vorteilhaften Ausgestaltung handelt es sich bei dem Trennmittel um eine Einsprühlösung.

Insbesondere wird als das Trennmittel zum Aufbringen auf die radial innere Seite des Reifens gesprüht. Beispielsweise ist das Trennmittel in einem flüssigen Aggregatzustand und wird durch eine geeignete Vorrichtung zu einem Sprühnebel, der als solcher gesprüht wird.

Vorteilhafterweise wird somit erreicht, dass das Trennmittel einfach und effizient aufgebracht werden kann.

Gemäß einem zweiten Aspekt wird eine Vorrichtung zur Behandlung einer radial inneren Seite eines Reifens angegeben. Die Vorrichtung ist dazu ausgebildet, das Verfahren gemäß dem ersten Aspekt durchzuführen.

Gemäß einem dritten Aspekt wird ein Computerprogramm umfassend einen computerausführbaren Code angegeben. Das Computerprogramm ist bei Ausführung dazu ausgebildet, zu veranlassen, dass das Verfahren gemäß dem ersten Aspekt mittels der Vorrichtung gemäß dem zweiten Aspekt durchgeführt wird.

Gemäß einem vierten Aspekt wird ein computerlesbares Speichermedium angegeben umfassend Befehle, bei der Ausführung durch einen Computer diesen veranlassen, das Verfahren gemäß dem ersten Aspekt mittels der Vorrichtung gemäß dem zweiten Aspekt auszuführen.

Ausführungsbeispiele der Erfindung sind anhand der schematischen Zeichnungen näher erläutert. Es zeigt:
Figur 1 ein schematisches Flussdiagramm eines Verfahrens zur Behandlung einer radial inneren Seite eines Reifens;
Figur 2 eine schematische Darstellung eines Reifens;
Figur 3 eine schematische Darstellung einer Vorrichtung zur Behandlung einer radial inneren Seite eines Reifens und eines vereinfachten Querschnitts des Reifens.

Die nachfolgenden Beschreibungen der Figuren dienen lediglich der beispielhaften Verdeutlichung und sollen hierbei die Ansprüche nicht einschränken.

Ferner ist eine Darstellung in den Figuren sofern nicht explizit angegeben nicht maßstabsgetreu.

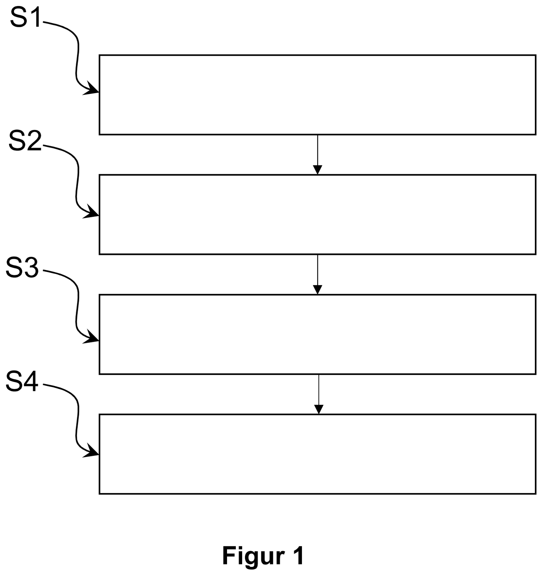

Figur 1 zeigt ein schematisches Flussdiagramm eines Verfahrens zur Behandlung einer radial inneren Seite 10 eines Reifens 1, umfassend die folgenden Schritte S1, S2, S3 und S4:
S1: Bereitstellen des Reifens 1, wobei auf der radial inneren Seite 10 des Reifens 1 ein Trennmittel aufgebracht ist.

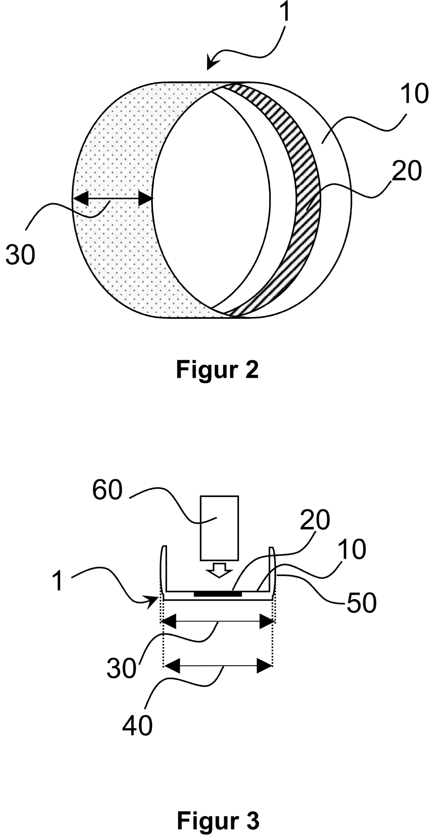

Ausgangspunkt des Verfahrens ist Schritt 1, wobei insbesondere ein vulkanisierter Luftreifen für ein Fahrzeug bereitgestellt wird. Hierbei ist das Trennmittel insbesondere auf der radial inneren Seite 10 des Reifens 1 aufgebracht; beispielsweise ist das Trennmittel eine Einsprühlösung, die somit an den Reifen 1 gesprüht werden kann. Die vereinfachte Geometrie des Reifens 1 ist in Figur 2 dargestellt.

S2: Durchführen einer Corona-Behandlung zumindest eines Teilbereichs 20 der radial inneren Seite 10 des Reifens 1.

Die Corona-Behandlung in Schritt S2 des Verfahrens ist ein elektrochemisches Verfahren, um eine Oberfläche zu modifizieren. Hierbei wird eine hochfrequente Hochspannungs-Entladung in der Luft auf die Oberfläche gelenkt.

Beispielsweise wird die Corona-Behandlung durch eine Vorrichtung 60 durchgeführt. Die Vorrichtung 60 befindet sich hierbei in einem Abstand zu einer zu behandelnden Oberfläche (insbesondere der Teilbereich 20 der radial inneren Seite 10 des Reifens 1). Mittels einer Elektrode wird eine Entladung in der Luft bewirkt, die auf den Teilbereich 20 trifft und ihn somit (mitsamt dem aufgebrachten Trennmittel) modifiziert.

Dadurch wird eine ausreichende Adhäsion an den Teilbereich 20 sichergestellt, obwohl das Trennmittel auf diesem aufgebracht ist. Durch die Corona-Behandlung wird das Trennmittel nicht entfernt, sondern geändert, sodass beispielsweise eine Klebeschicht ausreichend gut daran haften kann.

S3: Anbringen einer Klebeschicht auf dem behandelten Teilbereich 20 der radial inneren Seite 10 des Reifens 1.

Die Klebeschicht wird in Schritt S3 des Verfahrens aufgebracht. Insbesondere kann es sich dabei um ein doppelseitiges Klebeband handeln, das also auf beiden Seiten klebend ist. Eine Seite des Klebebands haftet somit an dem behandelten Teilbereich 20. Behandelt bezieht sich auf die Corona-Behandlung.

S4: Optionales Anbringen eines Schaums auf der Klebeschicht, der dazu ausgebildet ist, Hohlraumgeräusche in einem Reifeninneren zu dämpfen.

Auf die andere Seite des Klebebandes (das heißt die dem behandelten Teilbereich 20 abgewandte Seite) kann in einem optionalem Schritt S4 des Verfahrens ein Schaum angebracht werden. Dieser Schaum ist in dieser beispielhaften Ausführung dazu ausgebildet, Hohlraumgeräusche in einem Reifeninneren zu dämpfen.

In der beispielhaften Ausführung des Verfahrens wird somit eine effiziente Herstellung eines Reifens erwirkt, bei dem Hohlraumgeräusche in dem Reifeninneren gedämpft werden.

Figur 2 zeigt eine schematische Darstellung des Reifens 1. Der Reifen 1 weist hierbei eine radial äußere Seite auf (gepunktet) und die radial innere Seite 10 (weiß). Ein Teil der radial inneren Seite 10 des Reifens 1 ist gemäß der Durchführung der Coronabehandlung der behandelte Teilbereich 20 der radial inneren Seite 10 des Reifens 1 (schraffiert). Insbesondere ist dieser schraffierte behandelte Teilbereich 20 in Bezug auf eine Reifenbreite 30 des Reifens 1 zentriert.

Die Reifenbreite 30 des Reifens 1 bezieht sich hierbei insbesondere auf die Nenn-Querschnittsbreite des Reifens 1, das heißt insbesondere auf die Querschnittsbreite des Reifens 1 entsprechend der vorgeschriebenen Bezeichnung auf einer Seitenwand 50 des Reifens 1 gemäß EU-Norm ECE-R 30. Es ist zu beachten, dass in Figur 2 der Reifen 1 in vereinfachter Form als Mantelfläche (mit einer inneren und einer äußeren Fläche) eines Zylinders dargestellt ist insbesondere ohne Seitenwände 50 des Reifens 1. So ist die in Figur 2 eingezeichnete Reifenbreite 30 des Reifens 1 nur als vereinfachte Veranschaulichung zu verstehen.

Bei dem Reifen 1 handelt es sich insbesondere in der beispielhaften Ausführung um einen Reifen für ein Fahrzeug, der ferner beispielsweise hauptsächlich aus Kautschuk besteht und bei seinem Herstellungsprozess vulkanisiert wird.

Dabei kann der Reifen 1 insbesondere dazu ausgebildet sein, ein selbstdichtender Reifen zu sein oder ein Reifen, der dazu ausgebildet ist, Fahrgeräusche abzudämpfen.

Weiterhin ist in Figur 2 kein Trennmittel dargestellt, das auf der radial inneren Seite 10 des Reifens 1 aufgebracht ist. Das Trennmittel ist insbesondere über die gesamte Innenseite des Reifens 1 (also die radial innere Seite 10 des Reifens 1 sowie den in Figur 2 nicht-dargestellten inneren Teil der Seitenwände 50) aufgebracht. Für mögliche weitere Schritte des Verfahrens wie insbesondere in Figur 1 schematisch dargestellt muss jedoch nicht notwendigerweise das gesamte Trennmittel behandelt werden, sondern nur zumindest der Teilbereich 20 der radial inneren Seite 10 des Reifens 1.

Das Trennmittel kann insbesondere auf Silikon basiert sein. Alternativ kann das Trennmittel nicht auf Silikon basiert sein. Ferner dient es beispielsweise dazu, dass der Reifen 1 nach einer Vulkanisation leicht von einer entsprechenden Vorrichtung (beispielsweise umfassend einen Heizbalg auch Bladder genannt sowie eine Reifenprofilform) für die Vulkanisation abgelöst werden kann. Das Trennmittel kann ferner auf den Reifen 1 aufgetragen insbesondere gesprüht werden. Beispielsweise kann es auch auf die entsprechende Vorrichtung aufgebracht werden.

Figur 3 zeigt eine Vorrichtung 60 zur Behandlung der radial inneren Seite 10 des Reifens 1.

Die Vorrichtung 60 ist hierbei in einem Abstand zu dem Reifen 1 angeordnet. Figur 3 zeigt den Reifen 1 beispielhaft in einem Querschnitt. Hierbei umfasst der Reifen 1 zwei Seitenwände 50 sowie die radial innere Seite 10 des Reifens 1.

Die Reifenbreite 30 des Reifens 1 ist mindestens so groß wie eine Breite der Lauffläche 40 des Reifens 1. Sowohl die Reifenbreite 30 des Reifens als auch die Breite der Lauffläche 40 können insbesondere als Maß für die Breite des behandelten Teilbereichs 20 dienen. In einer beispielhaften Ausführungsform entspricht die Breite des behandelten Teilbereichs 20 25% bis 80% der Reifenbreite 30. In einer anderen beispielhaften Ausführungsform entspricht die Breite des behandelten Teilbereichs 20 25% bis 85% der Breite der Lauffläche 40 des Reifens 1.

Der behandelte Teilbereich 20 ist rotationssymmetrisch um die Rotationsachse des Reifens 1. Insbesondere ändert sich somit die Breite des behandelten Teilbereichs 20 nicht.

Die Vorrichtung 60 wird beispielsweise von einem Computerprogramm umfassend computerausführbaren Code dazu veranlasst, insbesondere das in Figur 1 dargestellte Verfahren durchzuführen.

Ferner kann ein Computer veranlasst werden, mittels der Vorrichtung 60 das Verfahren zur Behandlung der radial inneren Seite 10 der Reifens 1 gemäß Figur 1 durchzuführen. Hierbei umfasst insbesondere ein computerlesbares Speichermedium Befehle, die bei der Ausführung durch den Computer diesen veranlassen, das Verfahren zur Behandlung der radial inneren Seite 10 der Reifens 1 gemäß Figur 1 mittels der Vorrichtung 60 durchzuführen.

Der Computer weist hierfür beispielsweise eine Steuervorrichtung auf. Die Steuervorrichtung weist hierfür insbesondere eine Recheneinheit, einen Programm- und Datenspeicher, sowie beispielsweise eine oder mehrere Kommunikationsschnittstellen auf. Der Programm- und Datenspeicher und/oder die Recheneinheit und/oder die Kommunikationsschnittstellen können in einer Baueinheit und/oder verteilt auf mehrere Baueinheiten ausgebildet sein. Die Steuervorrichtung ist insbesondere mit der Vorrichtung 60 gekoppelt zum Senden und Empfangen von Steuerbefehlen und/oder Messdaten.

### Bezugszeichenliste

- 1: Reifen
- 10: Radial innere Seite
- 20: Teilbereich
- 30: Reifenbreite
- 40: Breite der Lauffläche
- 50: Seitenwand
- 60: Vorrichtung
- S1: Schritt
- S2: Schritt
- S3: Schritt
- S4: Schritt

## Patentansprüche

1. Verfahren zur Behandlung einer radial inneren Seite (10) eines Reifens (1), das Verfahren umfassend:
- Bereitstellen des Reifens (1), wobei auf der radial inneren Seite (10) des Reifens (1) ein Trennmittel aufgebracht ist; und
- Durchführen einer Corona-Behandlung zumindest eines Teilbereichs (20) der radial inneren Seite (10) des Reifens (1).

2. Verfahren nach Anspruch 1, wobei nach der Durchführung der Corona-Behandlung eine Klebeschicht auf den behandelten Teilbereich (20) der radial inneren Seite (10) des Reifens (1) angebracht wird.

3. Verfahren nach Anspruch 2, wobei nach der Durchführung der Corona-Behandlung ein doppelseitiges Klebeband als Klebeschicht auf den behandelten Teilbereich (20) der radial inneren Seite (10) des Reifens (1) angebracht wird.

4. Verfahren nach Anspruch 2 oder 3, wobei nach dem Anbringen der Klebeschicht auf dieser ein Schaum angebracht wird, der dazu ausgebildet ist, Hohlraumgeräusche in einem Reifeninneren zu dämpfen.

5. Verfahren nach einem der vorhergehenden Ansprüche, wobei eine Breite des behandelten Teilbereichs (20) 25% bis 80% einer Reifenbreite (30) des Reifens (1) entspricht.

6. Verfahren nach einem der Ansprüche 1 bis **4,** wobei eine Breite des behandelten Teilbereichs (20) 25% bis 85% einer Breite einer Lauffläche (40) des Reifens (1) entspricht.

7. Verfahren nach einem der vorhergehenden Ansprüche, wobei es sich bei dem Trennmittel um eine Einsprühlösung handelt.

8. Vorrichtung zur Behandlung einer radial inneren Seite (10) eines Reifens (1), die dazu ausgebildet ist, ein Verfahren nach einem der vorhergehenden Ansprüche durchzuführen.

9. Computerprogramm, umfassend computerausführbaren Code, der bei Ausführung dazu ausgebildet ist, zu veranlassen, dass ein Verfahren nach einem der Ansprüche 1 bis 7 mittels einer Vorrichtung zur Behandlung einer radial inneren Seite (10) eines Reifens (1) nach Anspruch 8 durchgeführt wird.

10. Computerlesbares Speichermedium, umfassend Befehle, die bei der Ausführung durch einen Computer diesen veranlassen, ein Verfahren nach einem der Ansprüche 1 bis 7 mittels einer Vorrichtung zur Behandlung der radial inneren Seite (10) des Reifens (1) nach Anspruch 8 auszuführen.
